# EUROPÄISCHE PATENTSCHRIFT

(11) **EP 2 896 080 B1**
(45) Veröffentlichungstag und Bekanntmachung des Hinweises auf die Patenterteilung: **29.11.2017**
(21) Anmeldenummer: 13730109.9
(22) Anmeldetag: 12.06.2013
(51) Int. Cl.: H01M 2/10, H01M 2/20, H01M 10/04

(54) **BATTERIEMODUL UND VERFAHREN ZU DESSEN HERSTELLUNG**
BATTERY MODULE AND METHOD FOR PRODUCING THE SAME
MODULE BATTERIE ET SON PROCÉDÉ DE PRODUCTION

(30) Priorität: 15.09.2012 DE 102012018344
(43) Veröffentlichungstag der Anmeldung: 22.07.2015
(73) Patentinhaber: Audi AG, 85045 Ingolstadt (DE)
(72) Erfinder: SCHÜSSLER, Martin, 85092 Kösching (DE); ALLMANN, Christian, 85051 Ingolstadt (DE)
(74) Vertreter: Herbst, Matthias Heinz
(86) Internationale Anmeldenummer: PCT/EP2013/001728
(87) Internationale Veröffentlichungsnummer: WO 2014/040666

(56) Entgegenhaltungen:
- CN-A- 101 859 912
- CN-A- 102 790 246
- DE-A1-102009 001 592
- JP-A- 2011 150 902

## Beschreibung

Die Erfindung betrifft ein Verfahren zur Herstellung eines mehrere elektrochemische Einzelzellen aufweisenden Batteriemoduls.

In Traktionsbatterien für Elektrofahrzeuge werden in zunehmendem Maße Batterien mit elektrochemischen Einzelzellen verwendet, bei denen es sich z. B. um Lithium-Ionen-Zellen handeln kann. Derartige Einzelzellen können einen zylindrischen Zellbecher als Hülle aufweisen, in den ein Zellwickel eingesetzt ist.

In der DE 10 2009 001 592 A1 wird ein Batteriemodul beschrieben, das Einzelzellen aufweist, die in einen offenporigen, porösen Festkörper eingebettet sind. Der Festkörper kann ein Metallschaum sein, während des Betriebs der Einzelzellen entstehende Wärme wird über den Metallschaum abgeleitet.

Die DE 10 2009 025 579 offenbart ein Batteriemodul, das Einzelzellen umfasst. Eine Einzelzelle weist einen Stromableiter auf, der einen Verbindungsstift kontaktiert, der von einem Metallschaum umschlossen ist.

Daneben sind andere Verfahren bekannt, um die Pluspole und die Minuspole der elektrochemischen Einzelzellen zu kontaktieren, beispielsweise kann dafür eine Kupferplatte verwendet werden. Allerdings werden dabei Schweißnähte durch ein Laserschweißverfahren erzeugt, dessen Prozessparameter genauestens überwacht werden müssen. Dieses Verfahren erfordert für die Anwendung bei elektrochemischen Einzelzellen daher eine sehr genaue Prozesssteuerung.

Der Erfindung liegt die Aufgabe zugrunde, ein Verfahren zur Herstellung eines mehrere elektrochemische Einzelzellen aufweisenden Batteriemoduls anzugeben, das eine hohe Prozesssicherheit aufweist und einfach und kostengünstig durchgeführt werden kann.

Zur Lösung dieser Aufgabe ist erfindungsgemäß ein Verfahren der eingangs genannten Art mit den folgenden Schritten vorgesehen:
- Anordnen von Zellbechern,
- Einbetten der Zellbecher in einen Metallschaum, und
- Einsetzen von Zellwickeln in die Zellbecher,
wobei Zellbecher aus einem elektrisch leitfähigen Material verwendet werden, die unmittelbar von dem Metallschaum umschlossen werden, wobei der Metallschaum als gemeinsamer Minuspol oder Pluspol der Einzelzellen verwendet wird.

Die Erfindung beruht auf der Erkenntnis, dass auf das Vorsehen eines separaten gemeinsamen Minuspols oder Pluspols für die Einzelzellen verzichtet werden kann, indem der die Zellbecher umgebende Metallschaum als Minuspol bzw. Pluspol verwendet wird.

Da in dem erfindungsgemäßen Verfahren zunächst die leeren Zellbecher in den Metallschaum eingebettet werden, wird vermieden, dass Zellwickel durch die bei der Herstellung des Metallschaums auftretenden hohen Temperaturen beschädigt werden. Einzelzellen können lediglich bis etwa 80 °C thermisch belastet werden, bei der Herstellung eines Metallschaums können jedoch wesentlich höhere Temperaturen entstehen, weshalb bisher entsprechende Aussparungen vorgesehen werden mussten, in die die Einzelzellen eingesetzt wurden. Bei dem erfindungsgemäßen Verfahren werden stattdessen zunächst leere Zellbecher angeordnet und in den Metallschaum eingebettet, anschließend, nach dem Erkalten des Metallschaums, werden Zellwickel in die Zellbecher eingesetzt, wodurch die Einzelzellen entstehen.

Bei dem erfindungsgemäßen Verfahren wird es besonders bevorzugt, dass Zellbecher aus einem elektrisch leitfähigen Material verwendet werden, die unmittelbar von dem Metallschaum umschlossen werden. Beispiele für das elektrisch leitfähige Material sind Stahl, Aluminium, Kupfer und deren Legierungen. Diese Materialien weisen eine gute Leitfähigkeit auf. Ein Zellwickel weist zwei Kontakte (Pluspol und Minuspol) auf, nach dem Einsetzen des Zellwickels in einen Zellbecher ist ein Kontakt, typischerweise der Minuspol, automatisch mit dem elektrisch leitfähigen Zellbecher und über den Zellbecher mit dem elektrisch leitfähigen Metallschaum verbunden. Dementsprechend werden alle Zellwickel und somit alle Einzelzellen durch das Einsetzen der Zellwickel in die Zellbecher elektrisch miteinander verbunden, wodurch sich ein gemeinsamer Minuspol oder ein gemeinsamer Pluspol für mehrere oder alle Einzelzellen eines Batteriemoduls ergibt.

Eine Weiterbildung der Erfindung sieht vor, dass die Zellbecher nach dem Einsetzen der Zellwickel durch eine Abdeckung verschlossen werden. Oberhalb der Abdeckung kann sich der jeweils andere Pol, typischerweise der Pluspol der Einzelzelle, befinden. Die Pluspole der mehreren Einzelzellen können durch eine Platte aus einem leitfähigen Material oder eine Kontakte aufweisende Leiterplatte oder dergleichen miteinander verbunden sein.

Daneben betrifft die Erfindung ein Batteriemodul mit mehreren elektrochemischen, in einen Metallschaum eingebetteten Einzelzellen, die jeweils einen in einem Zellbecher angeordneten Zellwickel aufweisen, wobei die Einzelzellen Zellbecher aus einem elektrisch leitfähigen Material aufweisen, die unmittelbar von dem Metallschaum umschlossen sind, wobei der Metallschaum einen gemeinsamen Minuspol oder Pluspol der Einzelzellen bildet.

Im Hinblick auf den Metallschaum des erfindungsgemäßen Batteriemoduls wird bevorzugt, dass dieser aus Aluminium oder einer Aluminiumlegierung besteht. Derartige Metallschäume zeichnen sich durch eine geringe Dichte aus, gleichzeitig gewährleisten sie eine gute Wärmeleitung, sodass Wärme, die beim Laden und Entladen von Einzelzellen entsteht, über den Zellbecher und den Metallschaum abgeführt werden kann.

Gemäß einer Weiterbildung der Erfindung kann es vorgesehen sein, dass der Metallschaum wenigstens einen Füllstoff wie Hohlglaskugeln aufweist, die optional mit einem Phasenwechselmaterial gefüllt sein können. Durch das Vorsehen eines Füllstoffs wie Hohlglaskugeln wird die Dichte verringert. Wenn die Hohlglaskugeln mit einem Phasenwechselmaterial gefüllt sind, wird die Wärmespeicherfähigkeit des Metallschaums signifikant erhöht. Alternativ kann das Phasenwechselmaterial auch direkt in die Hohlräume des Metallschaums eingebracht werden.

Weitere Ausgestaltungen der Erfindung sind in den Unteransprüchen beschrieben.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: das Anordnen von Zellbechern,
- Fig. 2: das Einbetten der Zellbecher in einen Metallschaum;
- Fig. 3: das Einsetzen von Zellwickeln in die Zellbecher; und
- Fig. 4: ein nach dem erfindungsgemäßen Verfahren hergestelltes Batteriemodul.

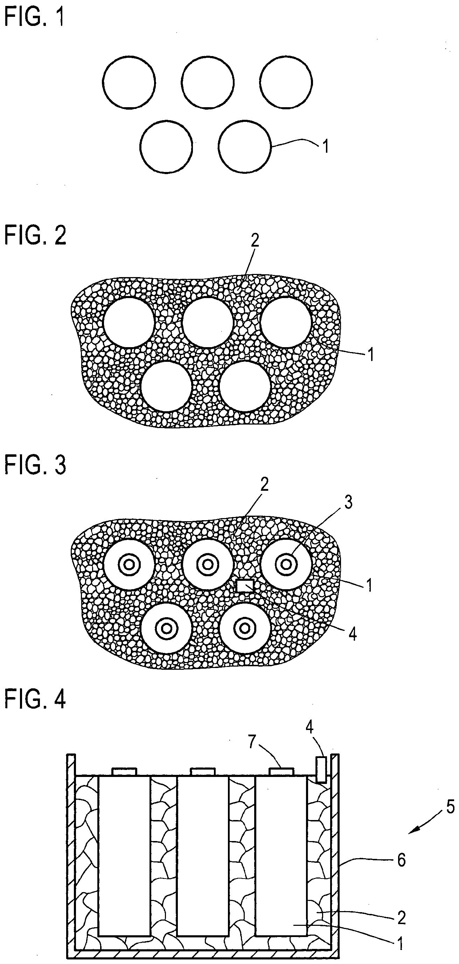

Fig. 1 zeigt schematisch den ersten Schritt des Verfahrens zur Herstellung eines mehrere elektrochemische Einzelzellen aufweisenden Batteriemoduls, bei dem mehrere rohrförmige Zellbecher 1 angeordnet werden. Die Zellbecher 1 sind in mehreren zueinander versetzten Reihen angeordnet, wodurch eine gute Ausnutzung des zur Verfügung stehenden Bauraums erzielt wird. Zwischen den einzelnen Zellbechern ist jeweils ein festgelegter Abstand vorgesehen. Die Zellbecher 1 sind an ihrer Oberseite offen und bestehen aus einem elektrisch leitfähigen Material, in dem dargestellten Ausführungsbeispiel aus Aluminium.

Fig. 2 zeigt den nächsten Schritt des Verfahrens zur Herstellung des Batteriemoduls. Die Zellbecher 1 werden in einen porösen Metallschaum 2 eingebettet, der aus einer Aluminiumlegierung besteht.

Bei Aufschäumen des Metallschaums 2 entstehen hohe Temperaturen, die jedoch nicht zu einer Beeinträchtigung der leeren Zellbecher 1 führen. Nach dem Schäumvorgang lässt man die umschäumten Zellbecher 1 abkühlen, zumindest bis eine kritische Temperatur von 80°C für die Zellwickel unterschritten wird. Die weitere Verarbeitung der umschäumten Zellbecher 1 kann auch erst nach Abkühlung auf Raumtemperatur erfolgen.

Da sowohl die Zellbecher 1 als auch der Metallschaum 2 elektrisch leitfähig sind, erfolgt automatisch eine elektrische Kontaktierung.

Fig. 3 zeigt, dass im nächsten Schritt der Herstellung des Batteriemoduls Zellwickel 3 in die Zellbecher 1 eingesetzt werden. Ein Zellwickel 3 ist ein Elektrodenstapel, der eine Anodenschicht, eine Kathodenschicht und eine Separatorschicht aufweist. Gegebenenfalls sind mehrere derartige Schichten in einem Zellwickel vorhanden. Jeder Zellwickel 3 weist einen Minuspol und einen Pluspol auf. Ein Zellwickel 3 ist dabei so ausgebildet, dass sein Minuspol nach dem Einsetzen in einen Zellbecher 1 den Zellbecher 1 berührt, wodurch die Minuspole aller Zellwickel 3 über die Zellbecher 1 und den Metallschaum 2 miteinander in elektrischer Verbindung sind. Dadurch entfällt das Anbringen eines separaten Minuspols bzw. einer entsprechenden Kontaktierung für jeden einzelnen Zellwickel 3, stattdessen kann eine Stelle des Metallschaums 2 als gemeinsamer Minuspol 4 verwendet werden.

Fig. 4 zeigt ein Batteriemodul in einer geschnittenen Ansicht. Das Batteriemodul 5 umfasst ein Gehäuse 6, das mit dem Metallschaum 2 gefüllt ist, der die einzelnen Zellbecher 1 umgibt. An der Oberseite des Batteriemoduls 5 ist der Minuspol 4 angeordnet, die Kontaktierung der mehreren Pluspole 7 der Einzelzellen erfolgt über eine Kontaktplatte (nicht dargestellt). Der Metallschaum 2 ist mit Hohlglaskugeln gefüllt, in denen sich ein Phasenwechselmaterial befindet.

## Patentansprüche

1. Verfahren zur Herstellung eines mehrere elektrochemische Einzelzellen aufweisenden Batteriemoduls (5), umfassend die folgenden Schritte:
- Anordnen von Zellbechern (1);
- Einbetten der Zellbecher (1) in einen Metallschaum;
- Einsetzen von Zellwickeln (3) in die Zellbecher (1), wobei Zellbecher (1) aus einem elektrisch leitfähigen Material verwendet werden, die unmittelbar von dem Metallschaum (2) umschlossen werden, wobei der Metallschaum (2) als gemeinsamer Minuspol (4) oder Pluspol (7) der Einzelzellen verwendet wird.

2. Verfahren nach Anspruch 1,
**dadurch gekennzeichnet,**
**dass** die Zellbecher (1) nach dem Einsetzen der Zellwickel (3) durch eine Abdeckung verschlossen werden.

3. Batteriemodul (5) mit mehreren elektrochemischen, in einen Metallschaum eingebetteten Einzelzellen, die jeweils einen in einem Zellbecher (1) angeordneten Zellwickel (3) aufweisen, wobei die Einzelzellen Zellbecher (1) aus einem elektrisch leitfähigen Material aufweisen, die unmittelbar von dem Metallschaum (2) umschlossen sind,
**dadurch gekennzeichnet,**
**dass** der Metallschaum (2) einen gemeinsamen Minuspol (4) oder Pluspol (7) der Einzelzellen bildet.

4. Batteriemodul nach Anspruch 3,
**dadurch gekennzeichnet,**
**dass** die Zellbecher (1) mit einer Abdeckung verschlossen sind.

5. Batteriemodul nach Anspruch 3 oder 4,
**dadurch gekennzeichnet,**
**dass** der Metallschaum (2) aus Aluminium oder einer Aluminiumlegierung besteht.

6. Batteriemodul nach einem der Ansprüche 3 bis 5,
**dadurch gekennzeichnet,**
**dass** der Metallschaum (2) wenigstens einen Füllstoff wie Hohlglaskugeln aufweist, die mit einem Phasenwechselmaterial gefüllt sein können.

## Claims

1. Method for manufacturing a battery module (5) comprising a plurality of electrochemical individual cells, comprising the following steps:
- arranging cell holders (1);
- embedding the cell holders (1) into a metal foam;
- inserting cell coils (3) into the cell holders (1), wherein cell holders (1) made of an electrically-conductive material are used which are directly enclosed by the metal form (2) wherein the metal foam (2) is used as a common negative pole (4) or positive pole (7) of the individual cells.

2. Method according to claim 1,
**characterised in that**
the cell holders (1) are closed by a cover after inserting the cell coils (3).

3. Battery module (5) with a plurality of electrochemical individual cells embedded in a metal foam, which each comprise a cell coil (3) arranged in a cell holder (1), wherein
the individual cells comprise cell holders (1) made of an electrically-conductive material which are directly enclosed by the metal form (2),
**characterised in that**
the metal foam (2) forms a common negative pole (4) or positive pole (7) of the individual cells.

4. Battery module according to claim 3,
**characterised in that**
the cell holders (1) are closed with a cover.

5. Battery module according to claim 3 or 4,
**characterised in that**
the metal foam (2) consists of aluminium or an aluminium alloy.

6. Battery module according to any one of claims 3 to 5,
**characterised in that**
the metal foam (2) comprises at least one filler such as hollow glass spheres which can be filled with a phase change material.

## Revendications

1. Procédé de fabrication d'un module de batterie (5) comportant plusieurs cellules individuelles électrochimiques, comprenant les étapes suivantes :
- agencement de boîtiers de cellules (1) ;
- enrobage des boîtiers de cellules (1) dans une mousse métallique ;
- pose de bobinages de cellule (3) dans les boîtiers de cellules (1),
dans lequel on utilise des boîtiers de cellules (1) qui sont en un matériau électriquement conducteur et qui sont enrobés directement par la mousse métallique (2), la mousse métallique (2) étant utilisée comme pôle négatif (4) ou pôle positif (7) commun des cellules individuelles.

2. Procédé selon la revendication 1,
**caractérisé en ce,**
**que** après la pose des bobinages de cellule (3), les boîtiers de cellules (1) sont fermés par un couvercle.

3. Module de batterie (5) avec plusieurs cellules individuelles électrochimiques qui sont enrobées dans une mousse métallique et qui comportent chacune un bobinage de cellule (3) agencé dans un boîtier de cellule (1), dans lequel
les cellules individuelles comportent des boîtiers de cellules (1) qui sont en un matériau électriquement conducteur et qui sont enrobés directement par la mousse métallique (2),
**caractérisé en ce**
**que** la mousse métallique (2) forme un pôle négatif (4) ou pôle positif (7) commun des cellules individuelles.

4. Module de batterie selon la revendication 3,
**caractérisé en ce**
**que** les boîtiers de cellules (1) sont fermés avec un couvercle.

5. Module de batterie selon la revendication 3 ou 4,
**caractérisé en ce**
**que** la mousse métallique (2) est en aluminium ou en un alliage d'aluminium.

6. Module de batterie selon l'une des revendications 3 à 5,
**caractérisé en ce**
**que** la mousse métallique (2) comporte au moins une matière de remplissage telle que des billes de verre creuses qui peuvent être remplies avec un matériau à changement de phase.
